# EUROPEAN PATENT APPLICATION

(11) **EP 4 786 802 A1**
(43) Date of publication of application: **05.08.2026**
(21) Application number: 25155723.7
(22) Date of filing: 04.02.2025
(51) Int. Cl.: F16B 5/04, F16B 19/08, F16B 19/06

(54) **JOINING ELEMENT, JOINING SET AND JOINING METHOD**

(71) Applicant: Newfrey LLC, New Britain, CT 06053 (US)
(72) Inventor: VORDERBRÜGGEN, Julian, 35394 Giessen (DE)
(74) Representative: Witte, Weller & Partner Patentanwälte mbB

(57) **Abstract**

A joining element (20) for a self-piercing joining method, the joining element (20) having a head (22) and a shaft (24), the shaft (24) being configured to be driven into a stack of joining partners (12, 14), wherein the head (22) has a head outer diameter (HOD) and a head height (HH), wherein the shaft (24) has a shaft outer diameter (SOD), wherein an outer diameter ratio is a ratio of the head outer diameter (HOD) to the shaft outer diameter (SOD), and wherein a target ratio of the head height (HH) to the outer diameter ratio is equal to or larger than 0.95 [1/mm]. (Fig. 1)

## Description

The present disclosure relates to a joining element for a self-piercing joining method, relates to a joining set comprising a joining element and a collar, and relates to a method of joining at least two joining partners using a joining element.

Joining two or more joining partners by means of a joining element is known for long. In many cases, as in the fabrication of bodies of vehicles or in the fabrication of aircraft, studs, rivets and bolts have been used for this purpose.

A traditional way of joining two joining partners is to drill a hole through the two joining partners, to insert a threaded bolt and to thread a nut onto the protruding end of the bolt. Also, it is known to use rivets. Blind rivets also require a hole to be drilled into the joining partners. Further, so-called self-piercing rivets are known, wherein a rivet is driven/punched into a stack of joining partners without a pre-hole being necessary. In self-piercing rivets, one distinguishes between solid self-piercing rivets and semi-hollow self-piercing rivets. Solid self-piercing rivets typically have outer grooves, into which material of at least one of the two joining partners flows during the punching process, using a suitable die. Semi-hollow self-piercing rivets are also driven into a stack of joining partners, wherein, typically, the end of a shaft of the self-piercing rivet flares out so as to provide an axial retention function. The free end of the semi-hollow self-piercing rivet typically does not protrude from a lower surface of the lowermost joining partner.

Also, so-called lock bolt systems are known, which include a set of a bolt and a collar. The bolt is inserted into a pre-drilled hole in the stack of joining partners, such that an end thereof protrudes from the lowermost joining partner. The collar is then pressed onto the end of the bolt, such that material of the collar flows into outer grooves of the bolt end.

In document "Single-step self-punching lock bolt process for aluminum sheets without pre-hole" by Han et al. in Journal of Manufacturing Processes, vol. 116, April 30, 2024, pages 92-108, a process for joining aluminum alloy joining partners is described, which uses a joining element having a head and a shaft, wherein the shaft is configured to be driven into a stack of joining partners without pre-hole, and wherein a collar is adapted to be pressed onto an end of the bolt. This paper describes that the resulting joints are promising in terms of tensile strength. Also, the paper describes that, during tensile tests, the bolt head consistently fractures before the bolt-collar fitting fails.

It is an object of the present disclosure to provide an improved joining element, an improved joining set and an improved joining method.

The above object is achieved by a joining element for a self-piercing joining method, the joining element having a head and a shaft, the shaft being configured to be driven into a stack of joining partners, wherein the head has a head outer diameter and a head height, wherein the shaft has a shaft outer diameter, wherein an outer diameter ratio is a ratio of the head outer diameter to the shaft outer diameter, and wherein the head height is selected such that a target ratio of the head height to the outer diameter ratio is equal to or larger than 0.95 [1/mm].

It has been found that the load bearing capacity of a joint produced with such a joining element can be improved if the above target ratio is established. In this respect, it has been found that it is important to bring the head height in correlation with the head outer diameter and the shaft outer diameter.

Particularly, it has been shown that prior art self-piercing lock bolt systems may exhibit brittle failure of the head during shear tests. The joining element as defined above can avoid such brittle failures.

The joining element, preferably, is rotationally symmetric about a longitudinal axis. The head height is defined as a distance from a radial border plane between the head and the shaft and a radial face of the head to which a driving force is applied. The head outer diameter preferably is the maximum outer diameter but can also be an average outer diameter. The shaft outer diameter preferably is the maximum outer diameter of the shaft but can also be an average outer diameter of the shaft.

The target ratio is preferably equal to or larger than 1.0 [1/mm] and preferably is larger than 1.02 [1/mm].

The object is achieved in full.

Preferably, the target ratio is smaller than 2.0 [1/mm], and preferably smaller than 1.5 [1/mm].

This target ratio leads to an improved load bearing capacity, without substantially increasing the material amount used for the joining element.

Preferably, the outer diameter ratio is in a range from 1.5 to 2.5, particularly from 1.7 to 2.1.

Further, it is preferred if the head height is in a range from 1.9 mm to 2.5 mm.

Also, it is preferred if the head outer diameter is in a range from 8.0 mm to 11.2 mm, particularly from 9.0 mm to 9.5 mm.

Preferably, the shaft outer diameter is in a range from 4.0 mm to 6.4 mm, particularly from 4.6 mm to 5.0 mm.

In a preferred embodiment, a thickness of the stack of the joining partners is in a range from 2.5 mm to 10.0 mm.

Further, it is preferred overall if the material of the joining element is stainless steel, particularly of type 1.4034, 1.4035, or 1.4057.

Further, it is preferred if the material of at least one of the joining partners is an aluminum alloy, particularly an aviation-grade aluminum alloy, preferably of Type EN AW-2024, particularly EN AW-2024 T351.

The above parameters each contribute to an improvement of the joining element and of joints produced thereby.

The joining element, preferably, is an integral metal element, which is preferably formed by forging.

In a preferred embodiment, the joining element has a hardness of greater than 44 HRC, preferably greater than 48 HRC, and particularly greater than 52 HRC.

The hardness is measured according to Rockwell, EN ISO 6508-1. Preferably, the hardness of the joining element is smaller than 62 HRC.

In another embodiment, it is preferred if the joining element has a head with a flat upper surface.

This allows a punch to drive the joining element into the stack of joining partners with a good force distribution across the upper surface area.

Further, it is preferred if the shaft has at least one radial recess.

In one embodiment, the shaft is part of a solid self-piercing rivet. In this case, the radial recess of the shaft is typically provided in a portion of the shaft which is, in a finalized joint, located within the stack of joining partners and is filled with material of at least one of the joining partners.

In another embodiment, the shaft is part of a lock bolt.

In this case, it is preferred if a shaft length is larger than a joining partner stack thickness, wherein the radial recess is located in a protruding portion of the shaft, and wherein the protruding portion of the shaft is configured to be connected to a collar.

Particularly, the protruding portion is configured to protrude from a lower surface of the lowermost joining partner in the finalized joint.

The joining element and the collar are preferably both connected to each other used in a single-step joining method, wherein the lock bolt type joining element is punched through the stack of joining partners and the collar is deformed, using a counterforce to the punching force, so that material of collar flows into the at least one radial recess.

In any case, the shaft of the joining element has at least one to three radial recesses, which are preferably each formed as annular recesses around the circumference of the shaft.

In the embodiment where the joining element is formed as a lock bolt, the shaft may be a solid shaft. In this case, the punching slug consisting of punched-out parts of the joining partners, is to be removed and is typically not part of the joint. However, in some cases, the collar to be used in combination with the lock bolt can be a cup-shaped collar which is adapted to receive the punching slug.

In an alternative embodiment, the shaft of the lock bolt is a hollow shaft which is adapted for receiving the punching slug.

In this case, the joining process can be conducted without creating waste.

The collar that is to be used in combination with the lock bolt-type joining element, is preferably also made of stainless steel, preferably of any of the types mentioned above, e.g type 1.4035 stainless steel.

Preferably, however, the material of the collar is not hardened.

In an alternative embodiment, the joining element is a solid self-piercing rivet, which preferably has at least one radial recess on its outer diameter.

The solid self-piercing rivet is used in combination with a rivet tool that applies axial pressure not only to the rivet but also to the joining partners, so that material of at least one of the joining partners flows into the radial recess of the shaft.

In another preferred embodiment, the joining element is a semi-hollow self-piercing rivet.

In this case, the shaft of the joining element typically does not have any outer radial recess. Further, it is preferred if the joining element is configured to be punched into the stack of joining partners in a manner that a free end of the joining element is spread/flared and does not protrude from the lower surface of the lowermost joining partner.

The above object is also achieved by a joining set comprising a joining element as defined above, and a collar adapted to be arranged, with respect to the stack of joining partners, on an opposite side of the head, and to be connected to a protruding portion of the shaft protruding from the stack of joining partners.

In this case, the joining element is preferably a lock bolt-type joining element.

Further, the above object is achieved by a method of joining at least two joining partners, comprising the steps of providing a stack of joining partners, providing a joining element of the above-described type, and driving the joining element into the stack of joining partners without pre-drilling a hole in the stack of joining partners.

It will be understood that the afore-mentioned features and to be described hereinafter cannot only be used in the respectively given combination, but also in different combinations or independently, without leaving the scope of the present invention.

Further features and advantages of the invention can be taken from the subsequent description of preferred embodiments with reference to the drawings. In the drawings:
- Fig. 1: shows a schematic sectional view of a finalized joint produced with an embodiment of a joining element;
- Fig. 2: is a view similar to Fig. 1 and shows a finalized joint produced with another embodiment of a joining element;
- Fig. 3: is a view similar to Fig. 1 and shows a finalized joint produced with another embodiment of a joining element;
- Fig. 4: is a view similar to Fig. 1 and shows a finalized joint produced with another embodiment of a joining element;
- Fig. 5: is a diagram of shear load in kN versus displacement in millimeters in a single lab joint shear test according to NASM 1312-04 on a joining element of the prior art; and
- Fig. 6: a diagram similar to Fig. 5, on joining elements according to embodiments of the present disclosure, and a reference example.

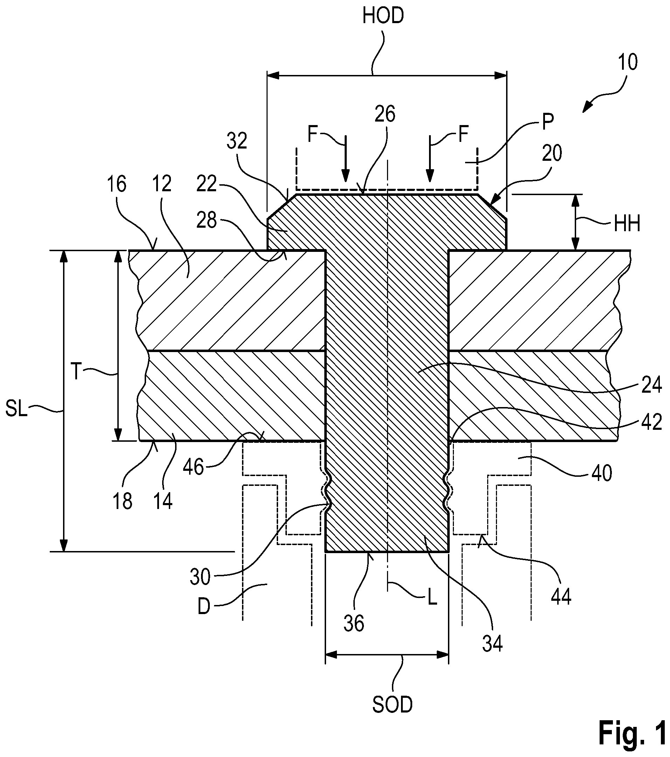

Fig. 1 shows a joint 10 which joins an upper joining partner 12 and a lower joining partner 14. The upper joining partner 12 and the lower joining partner 14 form a stack of joining partners. The stack of joining partners may include two or more, preferably less than five joining partners. Each of the joining partners is, preferably, a metal sheet element. Each of the joining partners, preferably, is made of an aviation-grade aluminum alloy, preferably of Type EN AW-2024.

The stack of joining partners 12, 14 has an upper surface 16 formed by the upper joining partner 12, and a lower surface 18 formed by the lower joining partner 14.

The joint 10 is formed with a joining element 20. The joining element 20 has a head 22 and a shaft 24. The head 22 has an upper flat surface 26, and an underside 28.

The head has a head height HH and a head outer diameter HOD. The shaft 24 has a shaft outer diameter SOD and a shaft length SL.

The shaft 24 extends from the head 22 along a longitudinal axis L.

The head outer diameter HOD is larger than the shaft outer diameter SOD. The underside 28 of the head is formed by a radial surface between the outer circumference of the shaft 24 and the outer circumference of the head 22.

The shaft length SL is larger than a thickness T of the stack of joining partners 12, 14.

If the head 22 contacts the upper joining partner 12, i.e. if the underside 28 of the head 22 contacts the upper surface 16, a portion 34 of the shaft 24 protrudes from the lower surface 18 of the lower joining partner 14. At least one, in the present embodiment two, recess(es) 30 is/are provided at the protruding portion 34. Each of the recesses 30 is formed as an annular recess having an inner diameter smaller than the shaft outer diameter SOD. The recesses are preferably provided only in the protruding portion 34, i.e. in an axial area between the lower surface 18 and a shaft end surface 36 of the shaft 24.

Further, as is shown in Fig. 1, a chamfer 32 may be provided at the head 22, which chamfer 32 connects the upper surface 26 of the head and an outer circumference of the head 22.

The joint 10 is realized with a set of the joining element 20 and a collar 40. The collar 40 is shown only schematically in dashed lines. The collar, typically, has a cutting edge 42 which corresponds to an outer circumference of the shaft end surface 36, which also forms a cutting edge. The collar 40, further, has a die contact surface 44 which can be contacted by a die D, and a joining partner contact surface 46 which is configured to be in contact with the lower surface 18.

In the finalized joint 10, as shown in Fig. 1, material of the collar 40 has entered the radial recess(es) 30 so as to form a joint 10 having a high tensile strength.

In a method of joining the at least two joining partners 12, 14, firstly, the stack of joining partners 12, 14 is provided. Subsequently, the joining element 10 is provided on top of the stack of joining partners 12, 14, i.e. above the upper surface 16. The collar 40 is arranged in contact with the lower surface 18 and is held by a die D.

At this stage, the joining element 20 is driven by means of a punch P, using a force F, into the stack of joining partners 12, 14. There is no pre-hole provided in the stack of joining partners, so that a slug of the joining partners is stamped through the collar 40, using its cutting edge 42. Finally, when the underside 28 has contacted the upper surface 16, the collar 40 is further deformed so that material of the collar flows into the recess(es) 30.

The joint 10 might experience shear loads, if the joining partners 12, 14 are relatively moved in directions perpendicular to the longitudinal axis L.

In order to prevent or at least alleviate brittle failures of the head 22 during the occurrence of such shear loads, the head height H should exceed a certain length, depending on the head outer diameter HOD and the shaft outer diameter SOD.

Particularly, an outer diameter ratio is a ratio of the head outer diameter HOD and the shaft outer diameter SOD. The head height HH is selected such that a target ratio of the head height HH to the outer diameter ratio is equal to or larger than 0.95 [1/mm], preferably equal to or larger than 1.0 [1/mm], and particularly preferred equal to or larger than 1.02 [1/mm].

The target ratio is preferably smaller than 2.0 [1/mm], and preferably smaller than 1.5 [1/mm].

The outer diameter ratio is preferably in a range from 1.5 to 2.5, particularly in a range from 1.7 to 2.1.

The head height is preferably in a range from 1.9 mm to 2.5 mm. The head outer diameter HOD is preferably in a range from 8.0 mm to 10.5 mm, particularly in a range from 8.5 mm to 10.0 mm, preferably in a range from 9.0 mm to 9.5 mm.

The shaft outer diameter is preferably in a range from 4.0 mm to 5.8 mm, particularly in a range from 4.6 mm to 5.0 mm.

The thickness T of the stack of joining partners 12, 14 is preferably in a range from 2.5 mm to 6.0 mm.

The material of the joining element is stainless steel, particularly Type 1.4035. The material of the collar is preferably stainless steel, particularly of Type 1.4035. The joining element is preferably hardened to a hardness (Rockwell, EN ISO 6508-1) of greater than 50 HRC, particularly greater than 52 HRC, and preferably smaller than 62 HRC, in particular smaller than 60 HRC.

The material of at least one of the joining partners is an aluminum alloy, particularly an aviation-grade aluminum alloy, preferably of Type EN AW-2024, particularly EN AW-2024 T351.

The joining element 20 and the collar 40 form a joining set for forming the joint 10.

In the following, further embodiments of joining elements are described, which correspond with respect to layout, structure and function to the joining element 20 of Fig. 1. In the following, only differences will be explained.

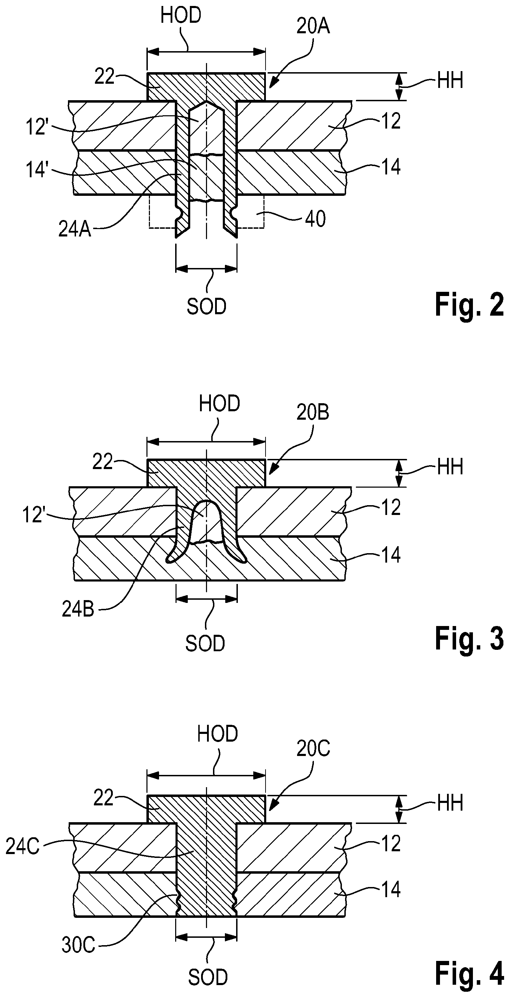

Fig. 2 shows a joining element 20A which corresponds to the joining element 20 of Fig. 1. In contrast to the joining element 20 which is a solid joining element, the joining element 20A of Fig. 2 includes a shaft 24A which is formed as a hollow shaft so as to receive a punching slug 12', 14'. Therefore, no waste is produced during the joining process. A collar 40 is shown schematically by dashed lines, similar to the collar 40 of Fig. 1.

The joining elements 20, 20A of Figs. 1 and 2 are lock bolt-type joining elements which are configured to pierce a stack of joining partners 12, 14 without pre-hole, and cooperate with a deformable collar so as to establish a lock bolt-type joint.

Fig. 3 shows a joining element 20B which is formed as a semi-tubular self-piercing rivet, having a head 22 and a shaft 24B which has spread or flared out during the step of punching the rivets 20B into the stack of joining partners 12, 14. In the finalized joint, as seen in Fig. 3, the end of the shaft 24B does not protrude from the lowermost joining partner 14.

Fig. 4 shows another embodiment of a joining element 20C, which is formed as a solid self-piercing rivet.

Here, the shaft 24C has an at least one radial recess 30C. The length of the shaft 24C corresponds essentially to the thickness of the stack of joining partners 12, 14, so that, in the finalized joint, the radial recess 30C is filled with material from at least one of the joining partners 12, 14, presently the lowermost joining partner 14.

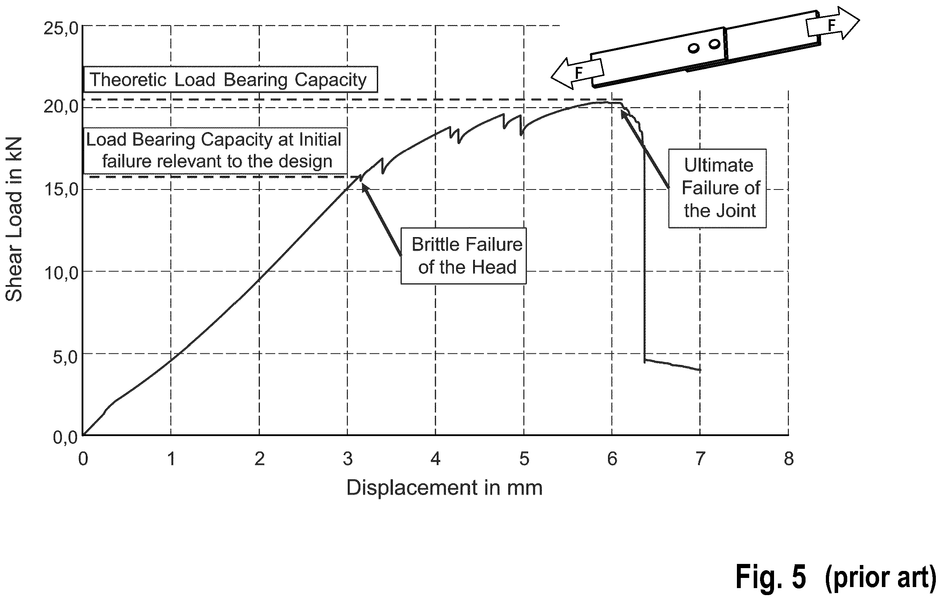

Fig. 5 shows the result of a single lap joint shear test according to NASM 1312-04 of a prior art joint, which uses a lock bolt-type joining element and a collar. The test is conducted by relatively displacing the joining partners 12, 14 in a plane perpendicular to the longitudinal axis L. The result of the test is shown by means of a diagram of shear load in kN versus displacement in millimeters. As is shown in Fig. 5, the joint was produced with joining partners of EN AW-2024 T351, each at a thickness of 2.5 mm.

The head height was 1.7 mm. The shaft outer diameter was 4.8 mm, and the head outer diameter was 9.2 mm.

The material of the joining element 20 was stainless steel, Type 1.4035 at a hardness of 54 HRC. The material of the collar was stainless steel, Type 1.4035, soft.

The test was conducted at a load rate of 210 N/s.

As is shown in Fig. 5, the joint has been designed for a theoretical load bearing capacity of approximately 20 kN.

Also, Fig. 5 shows that, at a displacement within the range from 3 mm to 5 mm, a brittle failure of the head occurs, thereby reducing the load bearing capacity to approximately 16 kN.

After the brittle failure, the joint still holds up to approximately 20 kN, wherein, however, for safety reasons only the 16 kN can be assumed to be the maximum load bearing capacity.

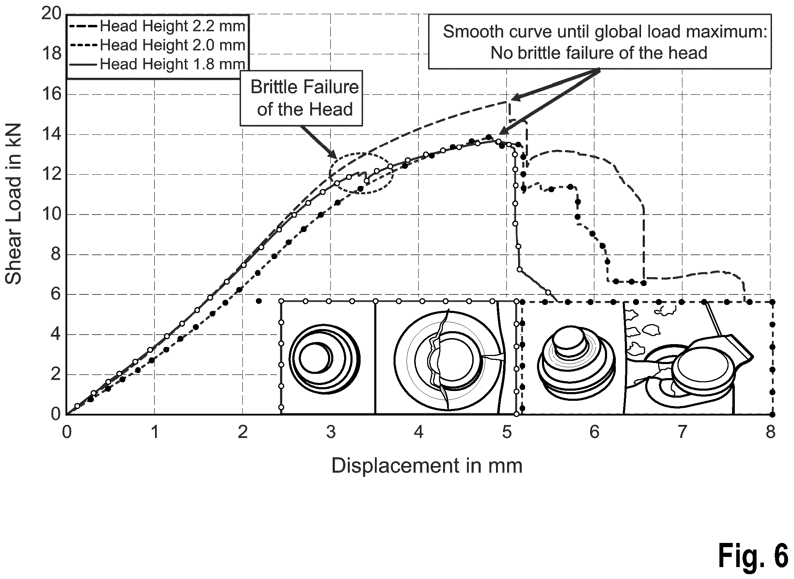

Fig. 6 shows a diagram similar to that of Fig. 5, for three different single lap joint shear tests according to NASM 1312-04. The joining element corresponded in design to the joining element 20 of Fig. 1. The joining partners each had a thickness of 1.5 mm.

The head outer diameter was 9.2 mm, and the shaft outer diameter was 4.80 mm. The material of the joining element and of the collar was identical to that of the test of Fig. 5, and, also, the load rate was identical.

Three different joining elements with three different head heights have been tested. A reference joining element having a head height of 1.8 mm clearly suffered brittle failure of the head at a shear load well below the regular load bearing capacity. This joining element therefore was held to be unsuitable.

On the other hand, in the other two joining elements having head heights of 2.0 mm and 2.2 mm, respectively, no brittle failure occurred, so that the theoretic load bearing capacity of approximately 14 kN and 15.5 kN, respectively, have been achieved without brittle failure.

Therefore, it has been shown that brittle failures in joining elements can be avoided, which have a head height HH selected such that a target ratio of the head height HH to the outer diameter ratio (which is the ratio of the head outer diameter HOD to the shaft outer diameter SOD) is equal to or larger than 0.95, particularly equal to or larger than 1.0 [1/mm].

### Reference numerals:

- 10: joint
- 12: upper joining partner
- 14: lower joining partner
- 16: upper surface 12
- 18: lower surface 14
- 20: joining element
- 22: head 20
- 24: shaft 20
- 26: upper surface 22
- 28: underside 22
- 30: recess(es) 24
- 32: chamfer 22
- 34: protruding portion 24
- 36: shaft end surface
- 40: collar
- 42: cutting edge 40
- 44: die contact surface 40
- 46: joining partner contact surface 40

- L: longitudinal axis
- P: punch
- D: die
- HH: head height
- HOD: head outer diameter
- SOD: shaft outer diameter
- SL: shaft length
- F: punching force
- T: thickness joining partner stack

**TABLE 1**

| | 20 | 20' | 20A | 20B | 20C |
|---|---|---|---|---|---|
| HH | 2.0 mm | 2.2 mm | 2.0 mm | **1.5** mm | **2.0** mm |
| HOD | 9.2 mm | 9.2 mm | 9.2 mm | 7.75 mm | 9.2 mm |
| SOD | 4.8 mm | 4.8 mm | 4.8 mm | 5.5 mm | 4.8 mm |

## Claims

1. A joining element (20) for a self-piercing joining method, the joining element (20) having a head (22) and a shaft (24), the shaft (24) being configured to be driven into a stack of joining partners (12, 14),
wherein the head (22) has a head outer diameter (HOD) and a head height (HH),
wherein the shaft (24) has a shaft outer diameter (SOD),
wherein an outer diameter ratio is a ratio of the head outer diameter (HOD) to the shaft outer diameter (SOD), and
wherein the head height (HH) is selected such that a target ratio of the head height (HH) to the outer diameter ratio is equal to or larger than 0.95 [1/mm].

2. The joining element of claim 1, wherein the target ratio is smaller than 2.0 [1/mm].

3. The joining element of claim 1 or 2, wherein
- the outer diameter ratio is in a range from 1.5 to 2.5; and/or
- the head height (HH) is in a range from 1.9 mm to 2.5 mm; and/or
- the head outer diameter (HOD) is in a range from 8.0 mm to 11.2 mm; and/or
- the shaft outer diameter (SOD) is in a range from 4.0 mm to 6.4 mm; and/or
- a thickness of the stack of joining partners (12, 14) is in a range from 2.5 mm to 10 mm.

4. The joining element of any one of claims 1 to 3, wherein
- the material of the joining element (20) is stainless steel, particularly of type 1,4034, 1.4035 or 1.4057.

5. The joining element of any one of claims 1 to 4, wherein the joining element (20) is an integral metal element.

6. The joining element of any one of claims 1 to 5, wherein the joining element (20) has a hardness of greater than 44 HRC, particularly greater than 52 HRC.

7. The joining element of any one of claims 1 to 6, wherein the head (22) has a flat upper surface (26).

8. The joining element of any one of claims 1 to 7, wherein the shaft (24) has at least one radial recess (30).

9. The joining element of claim 8, wherein a shaft length (SL) is larger than a joining partner stack thickness (T), wherein the radial recess (30) is located in a protruding portion (34) of the shaft (14), and wherein the protruding portion (34) of the shaft (24) is configured to be connected to a collar (40).

10. The joining element of any one of claims 1 to 9, wherein the shaft (24) is a solid shaft or wherein the shaft is a hollow shaft (24A; 24B) for receiving a punching slug (12', 14').

11. The joining element of any one of claims 1 to 8, wherein the joining element is a solid self-piercing rivet (20D).

12. The joining element of any one of claims 1 to 7, wherein the joining element is a semi-hollow self-piercing rivet (20C).

13. A joining set (20, 40) comprising a joining element (20) of any one of claims 1 to 10, and a collar (40) adapted to be arranged, with respect to the stack of joining partners (12, 14), on an opposite side of the head (22), and to be connected to a protruding portion (34) of the shaft (24) protruding from the stack of joining partners (12, 14).

14. A method of joining at least two joining partners (12, 14), comprising the steps:
- providing a stack of joining partners (12, 14);
- providing a joining element (20) of any one of claims 1 to 12;
- driving the joining element (20) into the stack of joining partners (12, 14) without pre-drilling a hole in the stack of joining partners (12, 14).
